(19) Europäisches Patentamt
European Patent Office
Office européen des brevets

(11) **EP 2 576 439 B1**

(12) **EUROPÄISCHE PATENTSCHRIFT**

(45) Veröffentlichungstag und Bekanntmachung des Hinweises auf die Patenterteilung:
**24.08.2016   Patentblatt 2016/34**

(21) Anmeldenummer: **11723034.2**

(22) Anmeldetag: **26.05.2011**

(51) Int Cl.:
*B82Y 30/00* (2011.01)     *H01M 4/58* (2006.01)
*H01M 10/052* (2010.01)    *H01M 4/136* (2010.01)
*H01M 4/1397* (2010.01)    *C04B 35/447* (2006.01)
*C04B 35/628* (2006.01)    *C04B 35/626* (2006.01)
*H01M 4/36* (2006.01)      *C01B 25/45* (2006.01)

(86) Internationale Anmeldenummer:
**PCT/EP2011/058626**

(87) Internationale Veröffentlichungsnummer:
**WO 2011/147907 (01.12.2011 Gazette 2011/48)**

(54) **KOHLENSTOFF-LITHIUMÜBERGANGSMETALLPHOSPHAT-VERBUNDMATERIAL MIT EINEM NIEDRIGEN KOHLENSTOFFGEHALT**

CARBON-LITHIUM TRANSITION METAL PHOSPHATE COMPOSITE MATERIAL HAVING A LOW CARBON CONTENT

MATÉRIAU COMPOSITE CARBONE/PHOSPHATE DE MÉTAL DE TRANSITION LITHIÉ À FAIBLE TENEUR EN CARBONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.05.2010   DE 102010021804**

(43) Veröffentlichungstag der Anmeldung:
**10.04.2013   Patentblatt 2013/15**

(73) Patentinhaber: **Johnson Matthey PLC**
**London EC4A 4AB (GB)**

(72) Erfinder:
• **NUSPL, Gerhard**
**81543 München (DE)**
• **TRAN, Nicolas**
**85405 Nandlstadt (DE)**
• **VOGLER, Christian**
**85368 Moosburg (DE)**
• **STINNER, Christoph**
**81737 München (DE)**

(74) Vertreter: **Gee, Rachel Sarah et al**
**Johnson Matthey Public Limited Company**
**Intellectual Property Department**
**Johnson Matthey Technology Centre**
**Blount's Court Road**
**Sonning Common**
**Reading, Berkshire RG4 9NH (GB)**

(56) Entgegenhaltungen:
EP-A2- 1 049 182          WO-A1-2009/122686
WO-A1-2010/012076     CA-A1- 2 614 634
CN-A- 101 186 290        US-A1- 2004 033 360
US-A1- 2010 279 117

• HU J ET AL: "Electrochemical Performance of Sol-Gel Synthesized LiFePO4 in Lithium Batteries", JOURNAL OF THE ELECTROCHEMICAL SOCIETY, ELECTROCHEMICAL SOCIETY. MANCHESTER, NEW HAMPSHIRE, US, Bd. 151, Nr. 8, 1. Januar 2004 (2004-01-01), Seiten A1279-A1285, XP002390223, ISSN: 0013-4651, DOI: 10.1149/1.1768546

- **Süd-Chemie, Phostech Lithium: "Innovative Material for Energy Storage", , Juni 2009 (2009-06), Seiten 1-11, XP000002656713, Gefunden im Internet: URL:http://sud-chemie.com/scmcms/web/binary.jsp?nodeId=4855&binaryId=9969&preview=&disposition=inline&lang=en [gefunden am 2011-08-09]**

**Beschreibung**

Die vorliegende Erfindung betrifft ein Verbundmaterial enthaltend Partikel eines Lithiumübergangsmetallphosphats und Kohlenstoff mit einem Kohlenstoffgehalt von 0,5 bis 1,3 Gew%.

Weiter betrifft die vorliegende Erfindung Elektroden für Sekundärlithiumionenbatterien enthaltend das erfindungsgemäße Verbundmaterial.

Dotierte und nicht-dotierte gemischte Lithium-Metalloxide finden in letzter Zeit besondere Beachtung als Elektrodenmaterialien in sogenannten "Lithiumionenbatterien". Als Kathodenmaterial werden beispielsweise seit den Arbeiten von Goodenough et al. (US 5,910,382) nicht-dotierte oder dotierte gemischte Lithiumübergangsmetallphosphate insbesondere als Kathodenmaterial in Elektroden von Sekundärlithiumionenbatterien verwendet. Zur Herstellung der Lithiumübergangsmetallphosphate werden sowohl Festkörpersynthesen wie auch sog. Hydrothermalsynthesen aus wässriger Lösung vorgeschlagen. Als Dotierungskationen sind aus dem Stand der Technik mittlerweile nahezu sämtliche Metall- und Übergangsmetallkationen bekannt.

So beschreibt die WO 02/099913 ein Verfahren zur Herstellung von $LiMPO_4$, wobei M neben Eisen ein oder mehrere Übergangsmetallkation(en) der ersten Übergangsmetallserie des Periodensystems der Elemente ist(sind), um phasenreines ggf. dotiertes $LiMPO_4$ herzustellen.

Die EP 1 195 838 A2 beschreibt die Herstellung von Lithiumübergangsmetallphosphaten, insbesondere $LiFePO_4$, mittels eines Festkörperverfahrens, wobei typischerweise Lithiumphosphat und Eisen(II)phosphat gemischt und bei Temperaturen von ungefähr 600 °C gesintert werden.

Weitere Verfahren zur Herstellung insbesondere von Lithiumeisenphosphat sind beispielsweise im Journal of Power Sources 119 bis 121 (2003) 247 bis 251, der JP 2002-151082 A sowie in der DE 103 53 266 A1 beschrieben worden.

Üblicherweise wird das so erhaltene dotierte bzw. nicht-dotierte Lithiumübergangsmetallphosphat mit Leitruß versetzt und zu Kathodenformulierungen verarbeitet. So beschreiben die EP 1 193 784 A1, die EP 1 193 785 A1 sowie die EP 1 193 786 A1 sog. Kohlenstoffkompositmaterialien aus $LiFePO_4$ und amorphem Kohlenstoff, der bei der Herstellung des Eisenphosphats aus Eisensulfat, Natriumhydrogenphosphat auch als Reduktionsmittel für verbleibende Reste an $Fe^{3+}$ im Eisensulfat sowie zur Verhinderung der Oxidation von $Fe^{2+}$ zu $Fe^{3+}$ dient. Die Zugabe von Kohlenstoff soll außerdem die Leitfähigkeit des Lithiumeisensphosphataktivmaterials in der Kathode erhöhen. So gibt insbesondere die EP 1 193 786 A1 an, dass Kohlenstoff einen Gehalt von nicht weniger als 3 Gew.-% in dem Lithiumeisenphosphat-Kohlenstoffverbundmaterial enthalten sein muss, um die nötige Kapazität und entsprechende Zykluscharakteristika des Materials zu erreichen.

Das EP 1 049 182 B1 schlägt vor, ähnliche Probleme durch die Beschichtung von Lithiumeisenphosphat mit amorphem Kohlenstoff zu lösen.

WO 2009/122686 offenbart ein Li-Ferro-Phosphat-Material mit einer BET-Oberfläche von 6 bis 30 $m^2/g$, einem Kohlenstoffgehalt von 0, 5 bis 8 Gew.-%, einem spezifischen Pulverwiderstand von 1 bis 1 x $10^5$ $\Omega$ x cm und einer Pressdichte von 2, 0 bis 2, 8 $g/cm^3$.

Die heutigen zum Einsatz insbesondere auch in Automobilen vorgesehenen wiederaufladbaren Lithiumionenbatterien haben jedoch hohe Anforderungen, insbesondere im Bezug auf ihre Entladungszyklen sowie ihre Kapazität.

Die bisher vorgeschlagenen Materialien bzw. Materialmischungen erreichen jedoch bislang noch nicht die erforderliche Elektrodendichte, da sie nicht die dazu nötige Pulverpressdichte aufweisen. Die Pressdichte des Materials kann dabei in etwa mit der Elektrodendichte bzw. der Dichte des sogenannten Aktivmaterials korreliert werden und weiter auch die Batteriekapazität. Je höher die Pressdichte ist, desto höher ist auch die Kapazität der Batterie.

Aufgabe der vorliegenden Erfindung war es daher, ein verbessertes Elektrodenmaterial, insbesondere ein verbessertes Kathodenmaterial für Sekundärlithiumionenbatterien bereitzustellen, das gegenüber den Materialien des Standes der Technik insbesondere eine verbesserte Pressdichte aufweist.

Die Aufgabe der vorliegenden Erfindung wird durch ein Verbundmaterial gelöst, enthaltend (i) Partikel eines Lithiumübergangsmetallphosphats, wobei das Übergangsmetall ausgewählt ist aus der Gruppe Fe, Co, Mn oder Ni oder Mischungen davon, und (ii) Kohlenstoff, wobei das Verbundmaterial einen Kohlenstoffgehalt von 0,5 bis 1, 3 Gew.%, eine BET-Oberfläche $\leq$ 12, 5 $m^2/g$, ein Rüttelgewicht >600 g/l, einen Pulverwiderstand < 70 $\Omega\cdot$ cm und einen $D_{50}$-Wert $\leq$ 0, 70 $\mu$m aufweist.

Der Kohlenstoffgehalt beträgt 0,5 bis 1,3 Gew.-%, bevorzugter 0,7 bis 1,3 Gew.-% und in noch einer weiteren Ausführungsform mehr als 0,9 bis 1,3 Gew.-%.

Überraschenderweise weist das erfindungsgemäße Verbundmaterial Pressdichten auf, die gegenüber den üblichen Elektrodenmaterialien des Standes der Technik eine Verbesserung von ca. 5 % und mehr aufweisen. Dieser Effekt dürfte, ohne an eine bestimmte Erklärung gebunden zu sein, auf den niedrigen Kohlenstoffgehalt zurückzuführen sein.

Durch die Erhöhung der Pressdichte wird eine höhere Elektrodendichte ermöglicht, so dass sich die Kapazität einer Batterie (gemessen über die volumetrische Energiedichte der Kathode) bei Verwendung des erfindungsgemäßen Verbundmaterials als Aktivmaterial in der Kathode einer Sekundärlithiumionenbatterie auch ca. um den Faktor 5 % und mehr erhöht.

Dieser Befund ist umso überraschender, da erfindungsgemäß weitaus geringere Mengen an Kohlenstoff in dem Verbundmaterial enthalten sind, als nach dem Stand der Technik bislang als notwendig für die Herstellung einer industriell einsetzbaren Elektrode enthaltend das Verbundmaterial angesehen wurde.

Der Begriff "ein Lithiumübergangsmetallphosphat" bedeutet im Rahmen der vorliegenden Erfindung, dass das Lithiumübergangsmetallphosphat dotiert oder nicht-dotiert vorliegt.

"Nicht-dotiert" heißt, dass reines, insbesondere phasenreines Lithiumübergangsmetallphosphat verwendet wird. Das Übergangsmetall ist dabei bevorzugt ausgewählt aus der Gruppe bestehend aus Fe, Co, Mn oder Ni oder Mischungen davon, weist also beispielsweise die Summenformeln $LiFePO_4$, $LiCoPO_4$, $LiMnPO_4$ bzw. $LiNiPO_4$ auf.

Unter einem dotierten (anders ausgedrückt "gemischt substituierten") Lithiumübergangsmetallphosphat wird eine Verbindung der Formel $LiM'_yM''_xPO_4$ verstanden, wobei M'' = Fe, Co, Ni oder Mn ist, M' von M'' verschieden ist und wenigstens ein Metallkation darstellt aus der Gruppe bestehend aus Co, Ni, Mn, Fe, Nb, Ti, Ru, Zr, B, Mg, Zn, Ca, Cu, Cr, Sr, Ir oder Kombinationen davon, bevorzugt aber Co, Ni, Mn, Fe, Ti, B, Mg, Zn und Nb darstellt, x ist eine Zahl < 1 und > 0,01 und y ist eine Zahl > 0,001 und < 0,99. Typische bevorzugte Verbindungen sind z.B. $LiNb_yFe_xPO_4$, $LiMg_yFe_xPO_4$ $LiB_yFe_xPO_4$ $LiMn_yFe_xPO_4$, $LiCo_yFe_xPO_4$, $LiMn_zCo_yFe_xPO_4$ mit $0 \le x, y, z \le 1$).

Weiter fallen in weiteren Ausführungsformen der Erfindung unter diesen Begriff Verbindungen der Formel

$$LiFe_xMn_{1-x-y}M_yPO_4$$

in der M ein zweiwertiges Metall aus der Gruppe Sn, Pb, Zn, Mg, Ca, Sr, Ba, Co, Ti und Cd ist und wobei gilt: x < 1, y < 0,3 und x + y < 1. Besonders bevorzugt ist bei dieser Verbindungsklasse als zweiwertiges Metall M Zn, Mg oder Ca, noch bevorzugter Zn und Mg.

Die Dotierungsmetallionen sind bei allen vorgenannten gemischten Lithiumübergangsmetallphosphaten bevorzugt in einer Menge von 0,05 bis 3 Gew.-%, bevorzugt 1-3 Gew.-%, bezogen auf das gesamte Lithiumübergangsmetallphosphat vorhanden. Die Dotierungsmetallkationen belegen entweder die Gitterplätze des Metalls oder des Lithiums. Ausnahmen davon sind gemischte Fe, Co, Mn, Ni Mischphosphate, die mindestens zwei der vorgenannten Elemente enthalten, bei denen auch größere Mengen an Dotierungsmetallkationen vorhanden sein können, im Extremfall bis 50 Gew.-%.

Der Kohlenstoff im Verbundmaterial kann erfindungsgemäß als reiner Pyrolysekohlenstoff und/oder elementarer Kohlenstoff vorliegen, wobei Pyrolysekohlenstoff bevorzugt wird.

Der Begriff "elementarer Kohlenstoff" bedeutet vorliegend, dass Partikel aus reinem Kohlenstoff, die sowohl amorph wie auch kristallin sein können, jedoch diskrete Partikel (in Form von Kugeln, wie zB. Kugelgraphit, Flocken, Körner etc) bilden, verwendet werden können. Beispiele für amorphen Kohlenstoff sind z.B. Ketjenschwarz, Acetylenschwarz, Ruß etc. Jedoch wird im Rahmen der vorliegenden Erfindung in weiteren Ausführungsformen bevorzugt ein kristallines elementares Kohlenstoffallotrop verwendet. Beispiele hierfür sind Graphit, Kohlenstoffnanoröhrchen (sog. Kohlenstoffnanotubes) sowie die Verbindungsklasse der Fullerene und Mischungen davon. Ebenso bevorzugt wie die kristallinen Allotrope ist auch sogenannter VGCF Kohlenstoff (vapour grown carbon fibers).

Der Begriff "Pyrolysekohlenstoff" bezeichnet im Rahmen der Erfindung das Vorhandensein einer durchgehenden, kontinuierlichen Schicht auf den Partikeln des Lithiumübergangsmetallphosphats aus nicht kristallinem Kohlenstoff, die keine diskreten Partikel aus Kohlenstoff enthält.

Der Pyrolysekohlenstoff wird durch Erhitzen, d.h. Pyrolyse bei Temperaturen von unter 1500°C, bevorzugt unter 1200°C und weiter bevorzugt von unter 1000°C und am meisten bevorzugt von unter 800°C von Vorläuferverbindungen gewonnen. Bei höheren Temperaturen von insbesondere >1000°C tritt oftmals eine Agglomerierung der Partikel an den Lithiumübergangsmetallphosphaten durch sogenannte "Versinterung" auf, was typischerweise zu einer schlechten Strombelastbarkeit des erfindungsgemäßen Verbundmaterials führt. Wichtig ist vorliegend nur, dass kein kristalliner geordneter synthetischer Graphit entsteht, dessen Herstellung Temperaturen von mindestens 2800°C bei Normaldruck erfordert.

Typische Vorläuferverbindungen sind beispielsweise Kohlenhydrate wie Laktose, Sucrose, Glucose, Stärke, Polymere wie beispielsweise Polystyrol-Butadien-Block-Copolymere, Polyethylen, Polypropylen, aromatische Verbindungen wie Benzol, Anthracen, Toluol, Perylen, höhere Alkohole wie Glykole und Polyglykole sowie alle weiteren dafür dem Fachmann an sich bekannten geeigneten Verbindungen.

Die genaue Temperatur hängt auch von dem zu beschichtenden spezifischen gemischten Lithiumübergangsmetallphosphat ab, da sich einzelne Lithiumübergangsmetallphosphate bei Temperaturen um 800°C oftmals schon zu Phosphiden zersetzen.

Die Schichtdicke der Beschichtung aus Pyrolysekohlenstoff beträgt vorteilhafterweise 2-15, bevorzugt 2-10 und ganz besonders bevorzugt 2-5 nm, wobei die Schichtdicke insbesondere durch die Art und Ausgangskonzentration des Vorläufermaterials, die genaue Temperaturwahl und Dauer des Erhitzens gezielt eingestellt werden kann.

Wie schon vorstehend ausgeführt, ist es in bestimmten Ausführungsformen der Erfindung möglich, dass sowohl Pyrolysekohlenstoff, wie auch elementarer Kohlenstoff im erfindungsgemäßen Verbundmaterial vorliegt. Der Anteil der jeweiligen Kohlenstoffart beträgt dabei mindestens 10% des Gesamtkohlenstoffanteils.

Das Rüttelgewicht des erfindungsgemäßen Verbundmaterials beträgt mehr als 600 g/l, in weiteren Ausführungsformen mehr als 650 g/l, in noch weiteren Ausführungsformen mehr als 700 g/l. Dies trägt zur Erhöhung der Pressdichte einer Elektrode enthaltend das erfindungsgemäße Verbundmaterial als Aktivmaterial bei und damit erhöht sich auch deren Kapazität. Es hat sich gezeigt, dass dieser Parameter besonders gut zur Charakterisierung von Elektrodenaktivmaterial geeignet ist.

Die BET-Oberfläche des erfindungsgemäßen Verbundmaterials beträgt $\leq 12{,}5$ m$^2$/g (gemessen nach DIN ISO 9277:2003-05), wodurch bei seiner Verarbeitung zu einer Elektrode weniger Binder erforderlich ist, als bei einem Material mit höherer BET Oberfläche. Geringe BET-Oberflächen haben weiter den Vorteil, dass die Pressdichte und damit die Elektrodendichte, folglich auch die Kapazität einer Batterie erhöht wird.

Die Pressdichte des erfindungsgemäßen Verbundmaterials beträgt > 2,2 g/cm$^3$, bevorzugt liegt die Pressdichte in einem Bereich von 2,2 bis 3,5 g/cm$^3$. Durch diese Werte für die Pressdichte resultieren deutlich höhere Elektrodendichten in einer Elektrode enthaltend das erfindungsgemäße Verbundmaterial als bei Materialien des Standes der Technik, so dass auch die Kapazität einer Batterie bei Verwendung einer derartigen Elektrode steigt.

Mit einer monomodalen Partikelgrößenverteilung beträgt der $D_{10}$-Wert des Verbundmaterials vorzugsweise $\leq$ 0,30 $\mu$m, der $D_{50}$-Wert bevorzugt $\leq$ 0,70 $\mu$m und der $D_{90}$-Wert $\leq$ 5,00 $\mu$m.

Die kleine Teilchengröße des erfindungsgemäßen Verbundmaterials führt beim Einsatz als Aktivmaterial in einer Elektrode in einer Batterie wie schon vorstehend ausgeführt zu einer höheren Stromdichte und auch zu einer besseren Zyklenbeständigkeit. Natürlich kann das erfindungsgemäße Verbundmaterial auch noch weiter fein vermahlen werden, sofern dies für eine spezifische Anwendung nötig sein sollte. Der Mahlvorgang wird dabei mit dem Fachmann an sich bekannten Methoden durchgeführt.

Der Pulverwiderstand des erfindungsgemäßen Verbundmaterials beträgt bevorzugt < 70 $\Omega\cdot$cm, ganz besonders bevorzugt < 50 $\Omega\cdot$cm, wodurch sich eine Batterie enthaltend eine Elektrode mit dem erfindungsgemäßen Verbundmaterial auch durch eine besonders hohe Strombelastbarkeit auszeichnet.

Das erfindungsgemäße Verbundmaterial wird durch an sich bekannte Verfahren hergestellt umfassend die Schritte des

a) Bereitstellens von Partikeln eines Lithiumübergangsmetallphosphats
b) ggf. Zugebens einer Vorläuferverbindung für Pyrolysekohlenstoff und ggf. von Partikeln aus elementarem Kohlenstoff zur Bildung einer Mischung
c) Kompaktierens der Mischung aus Schritt b)
d) Erhitzens der kompaktierten Mischung.

Wie vorstehend schon ausgeführt, kann das Lithiumübergangsmetallphosphat zur Verwendung im oben genannten Verfahren sowohl dotiert wie auch nicht-dotiert vorliegen.

Erfindungsgemäß ist es unwesentlich, wie die Synthese des Lithiumübergangsmetallphosphats vor dem Einsatz in dem oben genannten Verfahren durchgeführt wurde. D.h. das Lithiumübergangsmetallphosphat kann sowohl im Rahmen einer Festkörpersynthese oder auch im Rahmen einer sog. Hydrothermalsynthese erhalten werden, oder auch über ein anderes beliebiges Verfahren.

Es hat sich allerdings gezeigt, dass ein Lithiumübergangsmetallphosphat, das auf hydrothermalem Wege gewonnen wurde, im oben genannten Verfahren und im erfindungsgemäßen Verbundmaterial besonders bevorzugt eingesetzt wird, da dieses oftmals weniger Verunreinigungen aufweist als ein durch Festkörpersynthese gewonnenes.

Als Vorläuferverbindungen für den Pyrolysekohlenstoff eignen sich - wie vorstehend schon erwähnt - nahezu sämtliche organische Verbindungen, die unter den Reaktionsbedingungen des oben genannten Verfahrens zu Kohlenstoff umsetzbar sind.

Bevorzugt sind im Rahmen des oben genannten Verfahrens insbesondere Kohlenhydrate, wie Laktose, Sucrose, Glucose, Stärke bzw. deren Mischungen, ganz besonders bevorzugt Laktose, weiter höhere Alkohole wie Glykole, Polyglykole,

Polymere wie beispielsweise Polystyrol-Butadien-Block-Copolymere, Polyethylen, Polypropylen, aromatische Verbindungen wie Benzol, Anthracen, Toluol, Perylen sowie Mischungen davon und alle weiteren dafür dem Fachmann an sich bekannten geeigneten Verbindungen.

Im Falle des Einsatzes von Kohlenhydraten werden diese in bevorzugten Ausführungsformen in Form einer wässrigen Lösung eingesetzt, bzw. in einer vorteilhaften Weiterbildung der vorliegenden Erfindung wird nach Vermischen des Kohlenstoffs mit dem Lithiumübergangsmetallphosphat und/oder dem elementaren Kohlenstoff anschließend Wasser zugegeben, sodass eine Aufschlämmung erhalten wird, deren Weiterverarbeitung insbesondere aus produktionstechnischen und unter Emissionsgesichtspunkten gegenüber anderen Verfahrensvarianten bevorzugt ist.

Andere Vorläufermaterialien wie beispielsweise Benzol, Toluol, Naphthalin, Polyethylen, Polypropylen etc. können entweder direkt als Reinstoff bzw. in einem organischen Lösungsmittel eingesetzt werden.

Typischerweise wird im Rahmen des Verfahrens dabei eine Aufschlämmung gebildet, die anschließend vor Durchführung des Kompaktierens bei einer Temperatur von 100 bis 400°C getrocknet wird.

Das Kompaktieren der trockenen Mischung selbst kann als mechanische Kompaktion z.B. mittels eines Walzenkompaktors oder einer Tablettenpresse erfolgen, es kann aber auch als Roll-, Aufbau- bzw. Feuchtgranulation oder mittels jeder anderen dem Fachmann hierzu geeignet erscheinenden technischen Methode erfolgen.

Nach Kompaktieren der Mischung aus Schritt b), insbesondere der getrockneten Mischung, wird die Mischung wie schon vorstehend im Detail ausgeführt ganz besonders bevorzugt bei ≤ 800°C, noch bevorzugter bei ≤ 750°C gesintert, wobei das Sintern bevorzugt unter Schutzgasatmosphäre erfolgt. Unter den gewählten Bedingungen entsteht aus den Vorläuferverbindungen für Pyrolysekohlenstoff kein Graphit, sondern eine die Partikel aus dem Lithiumübergangsmetallphosphat teilweise oder zur Gänze bedeckende kontinuierliche Schicht aus Pyrolysekohlenstoff.

Bei höheren Temperaturen während der Sinterung entsteht zwar immer noch über einen weiten Temperaturbereich

Pyrolysekohlenstoff aus der Vorläuferverbindung, jedoch nimmt die Partikelgröße insbesondere der Partikel aus dem Lithiumübergangsmetall-phosphat durch Zusammensinterung zu, was die vorstehend geschilderten Nachteile mit sich bringt.

Aus produktionstechnischen Gründen wird bei der Sinterung bzw. Pyrolyse als Schutzgas Stickstoff verwendet, jedoch können auch alle weiteren bekannten Schutzgase wie beispielsweise Argon etc. sowie Mischungen davon verwendet werden. Ebenso kann auch technischer Stickstoff mit geringen Sauerstoffanteilen verwendet werden. Nach Erhitzen wird das erhaltene Produkt noch fein vermahlen, um anschließend als Ausgangsprodukt für die Herstellung einer Elektrode Verwendung zu finden.

Weiter wird die Aufgabe der vorliegenden Erfindung gelöst durch eine Elektrode, insbesondere eine Kathode für eine Sekundärlithiumionenbatterie enthaltend als Aktivmaterial das erfindungsgemäße Verbundmaterial. Durch die erhöhte Pressdichte des erfindungsgemäßen Verbundmaterials wird auch eine höhere Elektrodenaktivmassendichte in der Elektrode nach Formulierung erzielt.

Typische weitere Bestandteile einer Elektrode sind neben dem Aktivmaterial noch Leitruße sowie ein Binder. Als Binder kann jeder dem Fachmann an sich bekannte Binder eingesetzt werden, wie beispielsweise Polytetrafluorethylen (PTFE), Polyvinylidendifluorid (PVDF), Polyvinylidendifluorid - Hexafluorpropylen Copolymere (PVDF-HFP), Ethylen-propylendien-ter-Polymere (EPDM), Tetrafluorethylen-Hexafluorpropylen Copolymere, Polyethylenoxide (PEO), Polyacrylnitrile (PAN), Polyacrylmethacrylate (PMMA), Carboxymethylcellulosen (CMC) deren Derivate und Mischungen davon.

Typische Anteile der einzelnen Bestandteile des Elektrodenmaterials sind im Rahmen der vorliegenden Erfindung bevorzugt 80 bis 95 Gewichtsteile an Aktivmasse, d.h. des erfindungsgemäßen Verbundmaterials, 10 bis 2,5 Gewichtsteile Leitkohlenstoff und 10 bis 2,5 Gewichtsteile Binder.

Durch das erfindungsgemäße Verbundmaterial, das schon Kohlenstoff enthält, kann insbesondere im vorliegenden Fall auch die Menge an Leitkohlenstoff in der Formulierung der Elektrode gegenüber den Lithiumübergangsmetallphosphat-Elektroden des Standes der Technik deutlich verringert werden. In noch weiteren Ausführungsformen der vorliegenden Erfindung ist es trotz des überraschend niedrigen Kohlenstoffgehalts des Verbundmaterials möglich, den Zusatz von sogenanntem Leitkohlenstoff in der Elektrodenformulierung zur Gänze zu vermeiden. Eine typische Elektrodenformulierung in diesem Falle beträgt 90 bis 95 Gewichtsteile Aktivmaterial und 10 bis 5 Gewichtsteile, bevorzugt 5 Gewichtsteile Binder.

Die erfindungsgemäße Elektrode weist typischerweise eine Pressdichte von > 1,9 g/cm$^3$, bevorzugt > 2,2 g/cm$^3$, besonders bevorzugt > 2,3 g/cm$^3$ auf. Die spezifische Kapazität einer erfindungsgemäßen Elektrode beträgt dabei ca. 150 mAh/g bei einer volumetrischen Energiedichte von >300 mAh/cm$^3$, bevorzugter > 350 mAh/cm$^3$. Werte bis 390 mAh/cm$^3$ werden erfindungsgemäß ebenfalls erhalten.

Die Aufgabe der vorliegenden Erfindung wird weiter durch eine Sekundärlithiumionenbatterie enthaltend eine erfindungsgemäße Elektrode als Kathode gelöst, so dass eine Batterie mit höherer Elektrodendichte (bzw. Dichte der Aktivmasse) erhalten wird, die eine höhere Kapazität als bisher bekannte Sekundärlithiumionenbatterien aufweisen, wodurch auch der Einsatz derartiger Lithiumionenbatterien insbesondere in Automobilen bei gleichzeitig kleineren Abmessungen der Elektrode bzw. der Batterie als Ganzes möglich ist. Kathoden-Anodenpaare die mit einer Kathode enthaltend als Aktivmaterial das erfindungsgemäße Verbundmaterial (im folgenden wird nur die Summenformel des Lithiumübergangsmetallphosphats angegeben) sind ohne als beschränkend verstanden zu werden z.B. LiFePO$_4$ // Li$_4$Ti$_5$O$_{12}$ mit einer Einzelzellspannung von ca. 1,9 V, welche gut als Substitut für Blei-Säure-Zellen geeignet ist oder LiCo$_z$Mn$_y$Fe$_x$PO$_4$ // Li$_4$Ti$_5$O$_{12}$ mit erhöhter Zellspannung und verbesserter Energiedichte.

Die Erfindung ist nachstehend anhand von Figuren und einiger Beispiele ausführlicher erläutert, die als nicht einschränkend für den Umfang der vorliegenden Erfindung verstanden werden sollen.

Es zeigen:

Figur 1: Die volumetrische Kapazität einer erfindungsgemäßen Elektrode in Abhängigkeit von der C-Rate verglichen mit einer Elektrode des Standes der Technik.

Figur 2: Die spezifische Kapazität einer erfindungsgemäßen Elektrode verglichen mit einer Elektrode des Standes der Technik.

*1. Messmethoden*

Die Bestimmung der BET-Oberfäche erfolgte gemäß DIN ISO 9277:2003-05.

Die Bestimmung der Partikelgrößenverteilung erfolgte mittels Lasergranulometrie mit einem Malvern Mastersizer 2000 Gerät gemäß ISO 13320:2009.

Die Bestimmung der Pressdichte und des Pulverwiderstands erfolgte simultan an einem Mitsubishi MCP-PD51

Tablettenpressgerät mit einem Loresta-GP MCP-T610 Widerstandsmeßgerät, die in einer mit Stickstoff beaufschlagten Glovebox installiert sind zur Ausschaltung potentiell störender Effekte von Sauerstoff und Feuchte. Die hydraulische Betätigung der Tablettenpresse erfolgte über eine manuelle Hydraulikpresse Enerpac PN80-APJ (max. 10.000 psi / 700 bar) .

Die Messungen einer Probe von 4 g erfolgten bei den vom Hersteller empfohlenen Einstellungen.

Der Pulverwiderstand berechnet sich anschließend gemäß der folgenden Gleichung:

$$\text{Pulverwiderstand } [\Omega/cm] = \text{Widerstand } [\Omega] \text{ x Dicke } [cm] \text{ x RCF}$$

Der RCF-Wert ist ein geräteabhängiger Wert und wurde vorliegend gemäß den Werteinstellungen des Herstellers mit 2,758 angegeben.

Die Pressdichte wird nach folgender Formel berechnet:

$$\text{Pressdichte } (g/cm^3) = \frac{\text{Masse der Probe } (g)}{\Pi \text{ x } r^2 \ (cm^2) \text{ x Dicke der Probe (in cm)}}$$

r = Radius der Probentablette

Übliche Fehlertoleranzen liegen bei maximal 3 %. *Bestimmung der Dichte des Aktivmaterials in einer Elektrode*

Zur Bestimmung der Materialdichte des Aktivmaterials (d.h. des erfindungsgemäßen Verbundmaterials) wurden Elektroden (Dicke ca. 60 μm) mit einer Zusammensetzung 90 % Aktivmaterial, 5 Gew.-% Leitruß und 5 Gew.-% Binder hergestellt. Dazu wurden

2,0 g 10%ige PVDF-Lösung in NMP (N-Methylpyrrolidon), 5,4 g NMP, 0,20 g Leitruß Super P Li (Fa. Timcal), 3,6 g erfindungsgemäßes Verbundmaterial aus den Beispielen 1 und 2 bzw. Vergleichsmaterial aus den Vergleichsbeispielen 1 bis 5 in ein 50 ml Schraubdeckelglas eingewogen und für 5 Minuten bei 600 Upm gemischt, für 1 min mit einem Ultraschallfinger Hielscher UP200S dispergiert und anschließend nach Zugabe von 20 Glasperlen des Durchmessers 4 mm und verschließen des Glases bei einer Drehzahl von 10 UpM auf einem Rolltisch für mindestens 15 Stunden rotiert. Zur Elektrodenbeschichtung wurde die so erhaltene homogene Suspension mit einer Laborrakel mit 200 μm Spaltweite und einer

Vorschubgeschwindigkeit von 20 mm/sec auf eine Aluminium-Trägerfolie aufgetragen. Nach Trocknen bei 80°C im Vakuumtrockenschrank wurden Elektroden von 13 mm Durchmesser aus der Folie ausgestochen und bei Raumtemperatur auf einer uniaxialen hydraulischen Laborpresse von Specac bei einer Last von 10 t für 60 sec mechanisch nachverdichtet. Zur Dichtebestimmung wurde das Netto-Elektrodengewicht aus dem Bruttogewicht und dem bekannten Flächengewicht der Trägerfolie bestimmt und die Netto-Elektrodendicke mit einer Mikrometerschraube abzüglich der bekannten Dicke der Trägerfolie bestimmt.

Die Aktivmassedichte in g/cm$^3$ in der Elektrode berechnet sich daraus über

$$\text{(Aktivmasseanteil in Elektrodenrezeptur (90\%)} * \text{Elektrodennettogewicht in g} / (\pi (0{,}65cm)^2 * \text{Netto-Elektrodendicke in cm})$$

Beispiel 1: Erfindungsgemäßes Verbundmaterial enthaltend LiFePO$_4$

283,4 kg eines durch Hydrothermalsynthese (nach WO 2005/051840) hergestellten frischen Filterkuchens aus Lithiumeisenphosphat (187,6 Trockengewicht bei 66,2 % Feststoffgehalt), 9,84 kg Laktose-Monohydrat entsprechend 52,5 g je kg Lithiumeisenphosphats wurden in einem horizontalen 5501 Pflugscharmischer des Herstellers EMT mit Messerkopf vorgelegt. Anschließend wurden 80 Liter entionisiertes Wasser über einen internen Sprühkopf zugegeben und das Mischen über 15 min bei einer Umdrehungszahl von 140 UPM der horizontalen Welle und 1500 UPM des Messerkopfes durchgeführt.

Anschließend wurde die Aufschlämmung zur Vermeidung von Agglomeraten durch einen Probst & Class Micronisator/Konusmühle passiert und in einem Stork & Bowen Trockner mit Zerstäuberdüse bei einer Gaseintrittstemperatur von 350°C und einer Austrittstemperatur von 125°C bei einem Zerstäubungsdruck von 6,0 bar sprühgetrocknet. Das Trocknungsprodukt wurde anschließend mechanisch granuliert. Dazu wurde ein Alexanderwerk Walzenkompaktor WP 50N/75 bei einem Walzendruck von 35 bar und einer Walzendrehzahl von 8 U/min und einer Drehzahl der Zuführschnecke von 30 U/min verwendet. Die kompaktierten Proben wurden in einer horizontalen Siebrotormühle mit 2,5 mm Siebeinsatz granuliert und auf einem Schwingsieb mit 0,6 mm Maschenweite vom Staubanteil getrennt.

Das so erhaltene hellgraue Granulat wurde anschließend in einem gasdichten Linn Kammerofen unter Schutzgas bei einer Temperatur von 750° C und bei einer Aufheiz- und Haltezeit von je 3h unter Stickstoff kalziniert. Insgesamt ergibt sich ein Endkohlenstoffgehalt des gesamten Verbundmaterials von 1,14 Gew.-%.

Die anschließende Vermahlung des nun schwarzen Granulats erfolgte auf einer Alpine AFG 200 Mahlanlage mit 5,0 mm Mahldüsen bei einem Mahldruck von 2,5 bar.

Beispiel 2: Erfindungsgemäßes Verbundmaterial enthaltend LiFePO$_4$

Die Synthese des erfindungsgemäßen Verbundmaterials erfolgte wie in Beispiel 1, nur wurden 10,96 kg Laktose-Monohydrat zugegeben, um ein Produkt mit einem Gesamtkohlenstoffgehalt von 1,27 Gew.-% zu erhalten.

Vergleichsbeispiel 1

283,4 kg eines durch Hydrothermalsynthese (nach WO 2005/051840) hergestellten frischen Filterkuchens aus Lithiumeisenphosphat (187,6 Trockengewicht bei 66,2 % Feststoffgehalt), 14,67 kg Laktose-Monohydrat entsprechend 78,3 g je kg Lithiumeisenphosphats bzw. ca. 1,7 Gew.-% resultierender Pyrolysekohlenstoff wurden in einem horizontalen 5501 Pflugscharmischer des Herstellers EMT mit Messerkopf vorgelegt. Anschließend wurden 80 Liter entionisiertes Wasser über einen internen Sprühkopf zugegeben und das Mischen über 15 min bei einer Umdrehungszahl von 140 UPM der horizontalen Welle und 1500 UPM des Messerkopfes durchgeführt.

Anschließend wurde die Aufschlämmung zur Vermeidung von Agglomeraten durch einen Probst & Class Micronisator/Konusmühle passiert und in einem Stork & Bowen Trockner mit Zerstäuberdüse bei einer Gaseintrittstemperatur von 350°C und einer Austrittstemperatur von 125°C bei einem Zerstäubungsdruck von 6,0 bar sprühgetrocknet. Das Trocknungsprodukt wurde anschließend mechanisch granuliert. Dazu wurde ein Alexanderwerk Walzenkompaktor WP 50N/75 bei einem Walzendruck von 35 bar und einer Walzendrehzahl von 8 U/min und einer Drehzahl der Zuführschnecke von 30 U/min verwendet. Die kompaktierten Proben wurden in einer horizontalen Siebrotormühle mit 2,5 mm Siebeinsatz granuliert und auf einem Schwingsieb mit 0,6mm Maschenweite vom Staubanteil getrennt.

Das so erhaltene hellgraue Granulat wurde anschließend in einem gasdichten Linn Kammerofen unter Schutzgas bei einer Temperatur von 750° C und bei einer Aufheiz- und Haltezeit von je 3h unter Stickstoff kalziniert.

Die anschließende Vermahlung des nun schwarzen Granulats erfolgte auf einer Alpine AFG 200 Mahlanlage mit 5,0 mm Mahldüsen bei einem Mahldruck von 2,5 bar.

Vergleichsbeispiel 2

Als weitere Referenz zum erfindungsgemäßen Verbundmaterial aus Beispiel 1 wurde das Lithiumeisenphosphat wie in Beispiel 1 bzw. Vergleichsbeispiel 1 behandelt, aber mit 105 g Lactose-Monohydrat pro kg Lithiumeisenphosphat Trockenmasse vermischt, so dass der nach Kalzination resultierende Gesamtkohlenstoffgehalt 2,25 Gew.-% (als Pyrolysekohlenstoff) betrug.

Vergleichsbeispiele 3 bis 5

Die Vergleichsbeispiele 3 bis 5 wurden wie in der vorstehenden Synthese des Verbundmaterials der Beispiele und Vergleichsbeispiele durchgeführt, wobei die Menge an zugegebenem Laktose-Monohydrat so variiert wurde, um die in Tabelle 1 angegebenen Kohlenstoffgehalte für die jeweiligen Verbundmaterialien zu erhalten.

Die physikalischen Parameter des erfindungsgemäßen Verbundmaterials aus Beispiel 1 sowie der Vergleichsbeispiele zusammen mit elektrischen Eigenschaften einer Elektrode enthaltend die Verbundmaterialien als Aktivmaterial sind in Tabelle 1 gezeigt.

Tabelle 1

| Beispiel | Kohlenstoff [Gew.-%] | Rüttelgewicht (g/l) | d10 [µm] | d50 [µm] | d90 [µm] | BET [m²/g] | Pulverwiderstand (Ω·cm) | Pressdichte (g/cm³) | Spezif. Kapazität C/12,25°C 2.9-4.0V (mAh/g) | Volumetrische Energiedichte (mAh/cm³) |
|---|---|---|---|---|---|---|---|---|---|---|
| VB 4 | 0,70 | 493 | 0,19 | 0,39 | 1,29 | 10,1 | >10$^7$ | 1,77 | 97 | 172 |
| VB 5 | 0.87 | 501 | 0,19 | 0,59 | 2,21 | 10,4 | 1035,84 | 1,79 | 149 | 267 |
| 1 | 1,14 | 711 | 0,21 | 0,56 | 2,03 | 11,4 | 44,47 | 2,40 | 150 | 360 |
| 2 | 1,27 | 737 | 0,22 | 0,63 | 2,01 | 11,8 | 40,21 | 2,34 | 151 | 353 |
| VB 3 | 1,44 | 666 | 0,20 | 0,46 | 1,96 | 12,5 | 27,61 | 2,31 | 151 | 349 |
| VB 1 | 1,70 | 653 | 0,19 | 0,46 | 2,13 | 12,8 | 24,97 | 2,15 | 152 | 327 |
| VB 2 | 2,25 | 528 | 0,18 | 0,39 | 3,06 | 16,2 | 21,84 | 2,11 | 153 | 323 |

Wie aus Tabelle 1 ersehen werden kann, weist das erfindungsgemäße Verbundmaterial der Beispiele 1 und 2 gegenüber den Vergleichsbeispielen eine signifikante Zunahme des Rüttelgewichts auf. Auffallend ist das Maximum im erfindungsgemäßen Bereich für den Kohlenstoffgehalt verglichen mit geringeren und höheren Kohlenstoffgehalten. Ebenso ist eine deutliche Erhöhung der Pressdichte (korreliert mit der Aktivmassedichte der Elektrode) ersichtlich.

Die volumetrische Energiedichte einer Elektrode ist beim Einsatz erfindungsgemäßen Verbundmaterials als Elektrodenaktivmaterial ebenfalls am höchsten verglichen mit dem Material der Vergleichsbeispiele.

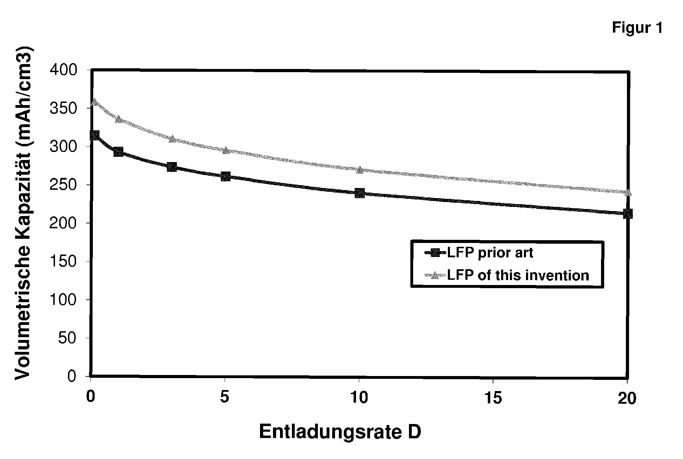

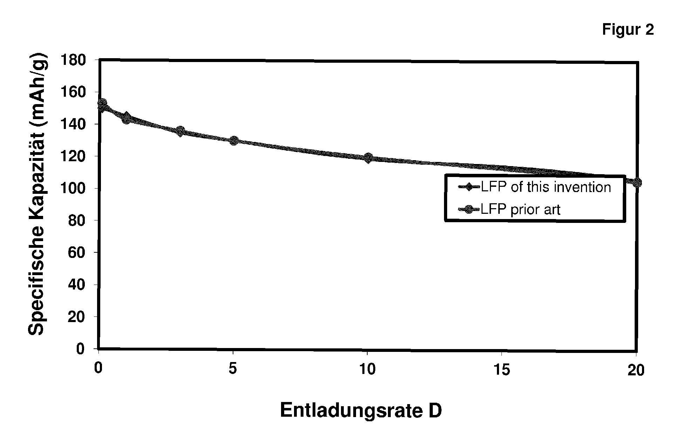

Wie aus Figur 2 ersichtlich ist, ist die spezifische Kapazität des Aktivmaterials aus erfindungsgemäßen Verbundmaterialien der Beispiele 1 und 2 verglichen mit dem Aktivmaterial einer Elektrode aus dem Material der Vergleichsbeispiele 1 bis 3 und 5 in etwa gleich. Die spezifische Kapazität steht nun bei einer noch weiteren Verringerung des Kohlenstoffgehalts (Vergleichsbeispiel 4). Die volumetrische Kapazität (Energiedichte) der Elektrode hingegen ist wie aus Figur 1 und den Werten der Tabelle 1 ersichtlich ist deutlich voneinander verschieden.

Die volumetrische Energiedichte berechnet sich gemäß der folgenden Gleichungen:

$$\text{Volumetrische Energiedichte} = \text{Pulverpressdichte } (g/cm^3) \times \text{spez. Kapazität } (mAh/g)$$

$$\text{Figur 1: volumetrische Energiedichte} = \text{Aktivmaterialdichte in Elektrode } (g/cm3) \times \text{spez. Kapazität } (mAh/g)$$

**Patentansprüche**

1.   Verbundmaterial enthaltend (i) Partikel eines Lithiumübergangsmetallphosphats, wobei das Übergangsmetall ausgewählt ist aus der Gruppe Fe, Co, Mn oder Ni oder Mischungen davon, und (ii) Kohlenstoff, wobei das Verbundmaterial einen Kohlenstoffgehalt von 0,5 bis 1,3 Gew.%, eine BET-Oberfläche $\leq$ 12,5 m$^2$/g, ein Rüttelgewicht >600 g/l, einen Pulverwiderstand < 70 $\Omega \cdot$cm und einen $D_{50}$-Wert $\leq$ 0,70 $\mu$m aufweist.

2.   Verbundmaterial nach Anspruch 1, wobei das Lithiumübergangsmetallphosphat mit Fremdatomen dotiert ist.

3.   Verbundmaterial nach Anspruch 2, wobei die Fremdatome ausgewählt sind aus Mg, Zn, Ca, B, Bi, Nb, Ta, Zr, Ti, Hf, V, W, Mo, Ru, Cu, Ag, Au, Ir.

4.   Verbundmaterial nach einem der vorhergehenden Ansprüche, wobei der Kohlenstoff Pyrolysekohlenstoff und/oder elementarer Kohlenstoff ist.

5.   Verbundmaterial nach Anspruch 4, wobei der Pyrolysekohlenstoff in Form einer Beschichtung auf den Partikeln des Lithiumübergangsmetallphosphats vorliegt.

6.   Verbundmaterial nach Anspruch 5, wobei die Schichtdicke der Beschichtung aus Pyrolysekohlenstoff im Bereich von 2 bis 15 nm liegt

7.   Verbundmaterial nach Anspruch 4, wobei der elementare Kohlenstoff ein kristallines Allotrop des Kohlenstoffs ist, ausgewählt aus Graphit, Kohlenstoffnanoröhrchen, Fullerenen, sowie Mischungen davon oder VGCF Kohlenstoff ist.

8.   Elektrode für eine Sekundärlithiumionenbatterie mit einem Aktivmaterial enthaltend das Verbundmaterial gemäß einem der Ansprüche 1 bis 7

9.   Sekundärlithiumionenbatterie umfassend eine Elektrode nach Anspruch 8.

**Claims**

1.   A composite material containing (i) particles of a lithium transition metal phosphate, wherein the transition metal is selected from the group Fe, Co, Mn or Ni or mixtures thereof, and (ii) carbon, wherein the composite material has a carbon content of 0.5 to 1.3 wt.%, a BET surface area of $\leq$ 12.5 m$^2$/g, an apparent density of > 600 g/l, a powder resistance of < 70 $\Omega \cdot$cm and a $D_{50}$ value of $\leq$ 0.70 $\mu$m.

**EP 2 576 439 B1**

**2.** A composite material according to claim 1, wherein the lithium transition metal phosphate is doped with foreign atoms.

**3.** A composite material according to claim 2, wherein the foreign atoms are selected from Mg, Zn, Ca, B, Bi, Nb, Ta, Zr, Ti, Hf, V, W, Mo, Ru, Cu, Ag, Au or Ir.

**4.** A composite material according to any one of the preceding claims, wherein the carbon is pyrolysis carbon and/or elemental carbon.

**5.** A composite material according to claim 4, wherein the pyrolysis carbon assumes the form of a coating on the lithium transition metal phosphate particles.

**6.** A composite material according to claim 5, wherein the layer thickness of the pyrolysis carbon coating is in the range from 2 to 15 nm.

**7.** A composite material according to claim 4, wherein the elemental carbon is a crystalline allotrope of carbon selected from graphite, carbon nanotubes, fullerenes, and mixtures thereof or is VGCF carbon.

**8.** An electrode for a secondary lithium-ion battery with an active material containing the composite material according to one of claims 1 to 7.

**9.** A secondary lithium-ion battery comprising an electrode according to claim 8.

**Revendications**

**1.** Matériau composite contenant : (i) des particules d'un phosphate de lithium - métal de transition, le métal de transition étant choisi parmi le groupe comprenant Fe, Co, Mn ou Ni, ou leurs mélanges, et (ii) du carbone, le matériau composite présentant une teneur en carbone de 0,5 à 1,3 % en poids, une surface BET $\leq$ 12,5 m$^2$/g, une densité apparente > 600 g/l, une résistivité de poudre < 70 $\Omega \cdot$ cm et une valeur $D_{50} \leq 0,70$ $\mu$m.

**2.** Matériau composite selon la revendication 1, dans lequel le phosphate de lithium - métal de transition est dopé avec des atomes étrangers.

**3.** Matériau composite selon la revendication 2, dans lequel les atomes étrangers sont choisis parmi Mg, Zn, Ca, B, Bi, Nb, Ta, Zr, Ti, Hf, V, W, Mo, Ru, Cu, Ag, Au, Ir.

**4.** Matériau composite selon l'une quelconque des revendications précédentes, dans lequel le carbone représente du carbone produit par pyrolyse et/ou du carbone élémentaire.

**5.** Matériau composite selon la revendication 4, dans lequel le carbone produit par pyrolyse est présent sous la forme d'une enduction sur les particules du phosphate de lithium - métal de transition.

**6.** Matériau composite selon la revendication 5, dans lequel l'épaisseur de la couche d'enduction à base de carbone produit par pyrolyse se situe dans la plage de 2 à 15 nm.

**7.** Matériau composite selon la revendication 4, dans lequel le carbone élémentaire représente une forme cristalline allotrophique du carbone, choisie parmi le graphite, des nanotubes de carbone, des fullerènes, ainsi que leurs mélanges, ou du carbone VGCF.

**8.** Électrode pour une batterie secondaire ion-lithium comprenant une substance active contenant le matériau composite selon l'une quelconque des revendications 1 à 7.

**9.** Batterie secondaire ion-lithium comprenant une électrode selon la revendication 8.

**Figur 1**

**Figur 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5910382 A, Goodenough
- WO 02099913 A
- EP 1195838 A2
- JP 2002151082 A
- DE 10353266 A1
- EP 1193784 A1
- EP 1193785 A1
- EP 1193786 A1
- EP 1049182 B1
- WO 2009122686 A
- WO 2005051840 A

**In der Beschreibung aufgeführte Nicht-Patentliteratur**

- *Journal of Power Sources,* 2003, 119-121, 247-251